# EUROPEAN PATENT SPECIFICATION

(11) **EP 2 724 623 B1**
(45) Date of publication and mention of the grant of the patent: **08.05.2019**
(21) Application number: 12802566.5
(22) Date of filing: 21.06.2012
(51) Int. Cl.: A23G 3/36, A23G 3/44, A23G 3/42

(54) **GEL, TEMPERATURE-RESISTANT GUMMY CANDY COMPRISING THE SAME, AND PREPARATION METHOD FOR THE GUMMY CANDY**
GEL, TEMPERATURBESTÄNDIGE GUMMISÜSSWARE DAMIT UND HERSTELLUNGSVERFAHREN FÜR GUMMISÜSSWARE
GEL, BONBON GOMMEUX RÉSISTANT À LA TEMPÉRATURE LE CONTENANT, ET PROCÉDÉ DE PRÉPARATION DU BONBON GOMMEUX

(30) Priority: 23.06.2011 CN 201110170844
(43) Date of publication of application: 30.04.2014
(73) Proprietor: Natural Medicine Institute of Zhejiang Yangshengtang Co., Ltd., Zhejiang (CN)
(72) Inventor: CAO, Cuifeng, Hangzhou 310024 Zhejiang (CN); WANG, Weiwei, Hangzhou 310024 Zhejiang (CN); WENG, Huiyan, Hangzhou 310024 Zhejiang (CN)
(74) Representative: Kolster Oy Ab
(86) International application number: PCT/CN2012/077347
(87) International publication number: WO 2012/175036

(56) References cited:
- EP-A1- 1 023 841
- EP-A1- 1 104 652
- EP-A2- 1 269 856
- WO-A1-01/97631
- WO-A1-2008/055510
- WO-A1-2008/100853
- WO-A1-2008/100854
- WO-A1-2012/071035
- CN-A- 1 164 816
- CN-A- 101 283 726
- CN-A- 101 283 726
- CN-A- 101 652 075
- GB-A- 2 342 030
- US-A- 5 932 273
- US-A1- 2004 237 663
- US-A1- 2008 026 038
- ZHAO, FAJI: 'The Property of Gelation and Gelatinous Candy (5)' THE FOOD INDUSTRY no. 3, March 2009, pages 59 - 62, XP008171915
- YANG NA ET AL.: 'THE APPLICATION OF COAGULANTS IN THE JELLY SWEETS PROCESSES' FOOD RESEARCH AND DEVELOPMENT vol. 29, no. 7, July 2008, pages 153 - 156, XP008171921

## Description

### Technical Field

The invention belongs to the field of food, and relates to a gel, a temperature-resistant candy comprising the same, and a method for preparing the gel gummy candy.

### Background Art

Gel gummy candy is a kind of products popular among consumers, and gelatin is used as gelata in most of the products to confer "Q" property on the products. Since gelatin collosol has a gel melting point of about 30°C, gummy candy products with gelatin alone as gelata have a poor temperature resistance, and begin to have the problems of deformation, sticking and melting under a relatively high temperature (36°C-38°C), which not only affects the mouth feel, but also is not suitable for quality guarantee as well as transportation and marketing. In order to meet the market demands of this kind of products in different regions and seasons, it has become an issue of concern in this field as to meet the request of mouth feel whilst maintaining temperature resistance of the products and extending the shelf life thereof.

A number of publications describe mixed gels with varying compositions. US 2004/0237663 A1 is directed to an oral delivery system for functional ingredients, an ingestible matrix comprising a sugar component, a carbohydrate, a hydrocolloid component, a solvent component, a source of mono- or divalent cations and a source of water. US 2008/00260038 A1 describes a no-laxation, low flatulence gummy product comprising a first dry-blend, a second dry-blend, a first liquid mixture and a second liquid mixture for preparing the product. EP 1104652 A1 describes a hydrocolloid confectionery product and the process for its preparation. WO 2012/071035 A1 describes jelly confectionery products having a stabilizer and a fiber blend. WO 2008/100853 A1 describes confectionery products comprising polvols.

### Summary of the Invention

The inventors found during research that a new mixed gel was obtained by reasonable reconstitution of gelatas and was applied to candies, and the resultant candies comprising the gel have good mastication and mouth feel as well as excellent temperature resistance and stability. In particular, the candies can be maintained at a temperature of 44°C for 5 h without causing the problems of affecting qualities, such as sticking, deformation, or melting. The invention was accomplished accordingly.

In one aspect, the invention relates to a mixed gel, comprising or consisting of gelatin, gellan gum, pectin and modified starch, wherein the proportion of the gelatin, gellan gum, pectin and modified starch (by mass) is: gelatin 4-10 parts, gellan gum 0.1-1 part, pectin 0.2-1.2 parts, modified starch 2-5 parts.

The invention also relates to the use of the mixed gel for preparing a gummy candy product.

The invention also relates to a gummy candy product, comprising sugar components and a mixed gel, wherein the mixed gel comprises or consists of gelatin, gellan gum, pectin and modified starch, wherein the proportion of gelatin, gellan gum, pectin and modified starch (by mass) is: gelatin 4-10 parts, gellan gum 0.1-1 part, pectin 0.2-1.2 parts, modified starch 2-5 parts.

The invention also relates to a method for preparing a gummy candy product using a mixed gel, wherein the mixed gel comprises or consists of gelatin, gellan gum, pectin and modified starch, wherein the proportion of gelatin, gellan gum, pectin and modified starch (by mass) is: gelatin 4-10 parts, gellan gum 0.1-1 part, pectin 0.2-1.2 parts, modified starch 2-5 parts.

The invention also relates to a method for preparing a gummy candy, comprising the steps of:
1) gel melting: adding water in an amount twice the weight of gelatin to a glue digester, adding gelatin when the temperature is raised to 60°C-80°C, stirring until the gelatin is completely dissolved, standing at the same temperature for 1-3 h to obtain a transparent gel solution A, and thoroughly mixing gellan gum and pectin with white granulated sugar or solid sugar alcohol in an amount 5 times the weight thereof, and adding water in an amount 12 times the weight thereof and boiling the mixture to obtain a gel solution B,
2) sugar melting: after boiling the sugar components by heating, adding water-dispersed modified starch paste in an amount twice the weight thereof, keeping the sugar solution boiling and adding the gel solution B, continuing boiling until the solids in the sugar solution reach 76-80 Brix as measured by Brix spindle, and then stopping heating to obtain the substance C,
3) sugaring off: mixing the transparent gel solution A and the substance C, stirring the mixture homogeneously, and then performing vacuum degassing until the solution is transparent and contains no bubble, to obtain a mixed solution with a temperature of 80°C-95°C,
4) blending: pouring the mixed solution obtained in step 3) into a blending barrel, the temperature of which is set to 80°C-90°C, and then adding sour agent, edible essence, edible colorant to the mixed solution, and homogenously stirring and blending the mixture,
5) casting moulding: performing casting by transferring the blended solution in step 4) to a casting machine,
6) drying: transferring the gummy candy product obtained after casting moulding in step 5) to a confined space at 20°C-30°C and a relative humidity of 15%-40%, and drying the product to a water content of 12%-20%;
7) subjecting the dried product to demoulding, polishing and packaging to obtain the final product.

According to the invention, the term "sugar component" as described in the invention refers to sugar in a broad sense, which for example, includes, but is not limited to sugar with a sweet taste, such as while granulated sugar, starch syrup, sugar without a sweet taste or suitable for patients with diabetes, such as xylitol.

According to the invention, the "%" as described in the invention generally refers to "% by mass", unless otherwise specified.

According to the invention, the proportion of the components of the mixed gel (by mass) is generally: gelatin 4-10 parts, gellan gum 0.1-1 part, pectin 0.2-1.2 parts, modified starch 2-5 parts; preferably gelatin 4-9 parts, gellan gum 0.1-0.8 part, pectin 0.2-1.2 parts, modified starch 2-5 parts; more preferably: gelatin 5-8 parts, gellan gum 0.1-0.8 part, pectin 0.2-0.8 part, modified starch 2-5 parts; even more preferably, gelatin 5-7 parts, gellan gum 0.1-0.6 part, pectin 0.2-0.6 part, modified starch 2-4 parts.

According to the invention, the raw materials used in the invention include, but are not limited to those wherein the gelatin is hide glue or bone glue with a gel strength of above 180 Bloom, the starch syrup has a DE (dextrose equivalent) value of 38%-44% and a solid content of 70%-84%, the sorbitol solid content is 70%, the modified starch is the acetate starch of potato, corn, cassava, the sour agent is selected from the group consisting of one or more of citric acid, malic acid, lactic acid, tartaric acid or phosphoric acid; the edible essence and the edible colorant are one or more of additives that are allowed to be added to gel candies according to regulations on food additives.

According to the invention, the temperature-resistant gel gummy candy of the invention consists of the following components in the following proportion:

| | |
|---|---|
| white granulated sugar | 10%-50% |
| starch syrup | 10%-50% |
| gelatin | 4%-10% |
| sorbitol | 2%-6% |
| gellan gum | 0.1%-1% |
| modified starch | 2%-5% |
| pectin | 0.2%-1.2% |
| sour agent | 0.5%-5% |
| edible essence | 0.1%-2% |
| edible colorant | 0.005%-0.05% |
| water | 12%-20%; |

preferably comprises the following components in the following proportion:

| | |
|---|---|
| white granulated sugar | 15%-40% |
| starch syrup | 10%-40% |
| gelatin | 4%-9% |
| sorbitol | 2%-5% |
| gellan gum | 0.1%-0.8% |
| modified starch | 2%-5% |
| pectin | 0.2%-1.2% |
| sour agent | 0.5%-5% |
| edible essence | 0.1%-2% |
| edible colorant | 0.005%-0.05% |
| water | 12%-20%. |

More preferably, the temperature-resistant gel candy comprises the following components in the following proportion:

| | |
|---|---|
| white granulated sugar | 20%-35% |
| starch syrup | 15%-40% |
| gelatin | 5%-8% |
| sorbitol | 2%-5% |
| gellan gum | 0.1%-0.8% |
| modified starch | 2%-5% |
| pectin | 0.2%-0.8% |
| sour agent | 0.5%-4% |
| edible essence | 0.1%-1.5% |
| edible colorant | 0.005%-0.04% |
| water | 12%-20%. |

Even more preferably, the temperature-resistant gel candy comprises the following components in the following proportion:

| | |
|---|---|
| white granulated sugar | 25%-35% |
| starch syrup | 18%-35% |
| gelatin | 5%-7% |
| sorbitol | 2%-4% |
| gellan gum | 0.1%-0.6% |
| modified starch | 2%-4% |
| pectin | 0.2%-0.6% |
| sour agent | 0.5%-4% |
| edible essence | 0.1%-1.5% |
| edible colorant | 0.005%-0.04% |
| water | 12%-20%. |

According to the invention, the gelatin is hide glue or bone glue with a gel strength of above 180 Bloom,
the starch syrup has a DE value of 38%-44% and a solid content of 70%-84%,
the sorbitol solid content is 70%,
the modified starch is the acetate starch of potato, corn, cassava,
the sour agent is selected from the group consisting of one or more of citric acid, malic acid, lactic acid, tartaric acid or phosphoric acid;
the edible essence and the natural edible colorant are one or more of additives that are allowed to be added to gel candies according to regulations on food additives.

### Advantageous Effects of the Invention

Since the gelata of the invention is resulted from reasonable reconstitution of gelatin, gellan gum, pectin and modified starch, the resistant temperature of the products of the invention is 5°C-8°C higher than that of products using gelatin gel alone, and the products of the invention have good stability and solve the problems of melting, sticking and deformation that are liable to occur under high-temperature environment in summer. The transportation and sale of the products of the invention are easier. Hence, the invention is of great significance in the technical field of gel candies.

### Specific Mode for Carrying out the Invention

The embodiments of the invention are described in detail by combining the following Examples. However, a person skilled in the art would understand that the following Examples are intended to illustrate the invention, rather than limiting the scope of the invention. Under the circumstance where the specific conditions are not indicated in the Examples, the embodiments are carried out according to conventional conditions or according to the conditions proposed by the manufacturer. The reagents or equipments, the manufacturers of which are not indicated, are routine products that are commercially available.

### Example 1:

Materials: white granulated sugar 5.5 kg, 84% starch syrup 9.0 kg, sorbitol 1.2 kg, potato modified starch 1.6 kg, gelatin 4.0 kg, pectin 0.2 kg, gellan gum 0.06 kg, anhydrous citric acid 0.52 kg, blueberry essence 0.1 kg, grape skin red 0.008 kg.

The temperature-resistant gel gummy candy was prepared according to the following steps :
1) gel melting: adding water in an amount twice the weight of gelatin to a glue digester, adding gelatin when the temperature is raised to 60°C-80°C, stirring until the gelatin was completely dissolved, standing at the same temperature for 2 h to obtain a transparent gel solution A, thoroughly mixing gellan gum and pectin with white granulated sugar in an amount 5 times the weight thereof, adding water in an amount 10 times the weight thereof, and boiling the mixture to obtain a gel solution B,
2) sugar melting: after boiling white granulated sugar, starch syrup, and sorbitol by heating, adding water-dispersed modified starch paste in an amount twice the weight thereof, keeping the sugar solution boiling and adding the gel solution B, continuing boiling until the solids in the sugar solution reached 76-80 Brix as measured by Brix spindle, and then stopping heating to obtain the substance C,
3) sugaring off: mixing the transparent gel solution A and the substance C, stirring the mixture homogenously, and then performing vacuum degassing until the solution was transparent and contained no bubble, to obtain a mixed solution with a temperature of 80°C-95°C,
4) blending: pouring the mixed solution obtained in step 3) into a blending barrel, the temperature of which was set to 80°C-90°C, and then adding 50% citric acid solution, blueberry essence, grape skin red to the mixed solution, and homogenously stirring and blending the mixture,
5) casting moulding: performing casting by transferring the blended solution in step 4) to a casting machine, selecting a casting mould in a bear shape (3.0 g/grain), and getting about 7000 grains;
6) drying: transferring the gummy candy product obtained after casting moulding in step 5) to a confined space at about 25°C and a relative humidity of 25%-35%, and drying the product to a water content of 18%;
7) subjecting the dried product to demoulding, polishing and packaging to obtain the final product.

### Example 2:

Materials: white granulated sugar 6 kg, 76% starch syrup 11 kg, sorbitol 1 kg, potato modified starch 1.2 kg, gelatin 4.4 kg, pectin 0.2 kg, gellan gum 0.05 kg, buffered lactic acid 1 kg, strawberry essence 0.12 kg, cochineal solution 0.006 kg.

The temperature-resistant gel gummy candy was prepared according to the following steps:
1) gel melting: adding water in an amount twice the weight of gelatin to a glue digester, adding gelatin when the temperature was raised to 60°C-80°C, stirring until gelatin was completely dissolved, standing at the same temperature for 2 h to obtain a transparent gel solution A, thoroughly mixing gellan gum and pectin with white granulated sugar in an amount 5 times the weight thereof, adding water in an amount 10 times the weight thereof and boiling the mixture to obtain a gel solution B;
2) sugar melting: after boiling white granulated sugar, starch syrup, and sorbitol by heating, adding water-dispersed modified starch paste in an amount twice the weight thereof, keeping the sugar solution boiling and adding the gel solution B, continuing boiling until the solids in the sugar solution reached 80-82 Brix as measured by Brix spindle, and then stopping heating to obtain the substance C;
3) sugaring off: mixing the transparent gel solution A and the substance C, stirring the mixture homogenously, and then performing vacuum degassing until the solution was transparent and contained no bubble, to obtain a mixed solution with a temperature of 80°C-95°C,
4) blending: pouring the mixed solution obtained in step 3) into a blending barrel, the temperature of which was set to 80°C-90°C, and then adding buffered lactic acid, strawberry essence, and cochineal colorant to the mixed solution, and homogenously stirring and blending the mixture,
5) casting moulding: performing casting by transferring the blended solution in step 4) to a casting machine, selecting a casting mould in a strawberry shape (2.5 g/grain), and getting about 9000 grains;
6) drying: transferring the gummy candy product obtained after casting moulding in step 5) to a confined space at about 28°C and a relative humidity of 30%-35%, and drying the product to a water content of 16%;
7) subjecting the dried product to demoulding, polishing and packaging to obtain the final product.

### Example 3:

Materials: white granulated sugar 6 kg, 80% starch syrup 8.8 kg, sorbitol 1.6 kg, corn modified starch 1 kg, gelatin 4.6 kg, pectin 0.4 kg, gellan gum 0.04 kg, anhydrous citric acid 0.8 kg, malic acid 0.3 kg, lemon essence 0.04 kg, lutein 0.001 kg.

The temperature-resistant gel gummy candy was prepared according to the following steps:
1) gel melting: adding water in an amount twice the weight of gelatin to a glue digester, adding gelatin when the temperature was raised to 60°C-80°C, stirring until gelatin was completely dissolved, standing at the same temperature for 2 h to obtain a transparent gel solution A, thoroughly mixing gellan gum and pectin with white granulated sugar in an amount 5 times the weight thereof, adding water in an amount 10 times the weight thereof, and boiling the mixture to obtain a gel solution B,
2) sugar melting: after boiling white granulated sugar, starch syrup, and sorbitol by heating, adding water-dispersed modified starch paste in an amount twice the weight thereof, keeping the sugar solution boiling and adding the gel solution B, continuing boiling until the solids in the sugar solution reached 80 Brix as measured by Brix spindle, and then stopping heating to obtain the substance C,
3) sugaring off: mixing the transparent gel solution A and the substance C, stirring the mixture homogenously, and then performing vacuum degassing until the solution was transparent and contained no bubble, to obtain a mixed solution with a temperature of 80°C-95°C,
4) blending: pouring the mixed solution obtained in step 3) into a blending barrel, the temperature of which was set to 80°C-90°C, and then adding 50% citric acid and malic acid solution, lemon essence, lutein to the mixed solution, and homogenously stirring and blending the mixture,
5) casting moulding: performing casting by transferring the blended solution in step 4) to a casting machine, selecting a casting mould in a semicircle shape (4.0 g/grain), and getting about 5000 grains;
6) drying: transferring the gummy candy product obtained after casting moulding in step 5) to a confined space at about 22°C and a relative humidity of 28%-30%, and drying the product to a water content of 20%;
7) subjecting the dried product to demoulding, polishing and packaging to obtain the final product.

### Example 4: Sugar-free temperature-resistant gel gummy candy 1

Materials: isomaltitol 6 kg, 75% maltitol solution 32.8 kg, corn modified starch 1.6 kg, gelatin 2.6 kg, pectin 0.4 kg, gellan gum 0.06 kg, anhydrous citric acid 0.8 kg, malic acid 0.3 kg, mango essence 0.04 kg, lutein 0.001 kg.

The temperature-resistant gel gummy candy was prepared according to the following steps:
1) gel melting: adding water in an amount twice the weight of gelatin to a glue digester, adding gelatin when the temperature was raised to 60°C-80°C, stirring until gelatin was completely dissolved, standing at the same temperature for 2 h to obtain a transparent gel solution A, and thoroughly mixing gellan gum and pectin with isomaltitol in an amount 5 times the weight thereof, and adding water in an amount 10 times the weight thereof and boiling the mixture to obtain a gel solution B,
2) sugar melting: after boiling isomaltitol and maltitol solution by heating, adding water-dispersed modified starch paste in an amount twice the weight thereof, keeping the sugar solution boiling and adding the gel solution B, continuing boiling until the solids in the sugar solution reached 80 Brix as measured by Brix spindle, and then stopping heating to obtain the substance C,
3) sugaring off: mixing the transparent gel solution A and the substance C, stirring the mixture homogenously, and then performing vacuum degassing until the solution was transparent and contained no bubble, to obtain a mixed solution with a temperature of 80°C-95°C,
4) blending: pouring the mixed solution obtained in step 3) into a blending barrel, the temperature of which was set to 80°C-90°C, and then adding 50% citric acid solution and malic acid solution, mango essence, lutein to the mixed solution, and homogenously stirring and blending the mixture,
5) casting moulding: performing casting by transferring the blended solution in step 4) to a casting machine, selecting a casting mould in a bear shape (3.0 g/grain), and getting about 12000 grains;
6) drying: transferring the gummy candy product obtained after casting moulding in step 5) to a confined space at about 24°C and a relative humidity of 25%-28%, and drying the product to a water content of 18%;
7) subjecting the dried product to demoulding, polishing and packaging to obtain the final product.

### Example 5: Sugar-free temperature-resistant gel gummy candy 2

The materials included: xylitol 4kg, 75% maltol solution 12.8kg, sorbitol 0.9kg, corn modified starch 0.5 kg,gelatin 1.6kg, pectin 0.2kg, gellan gum 0.02kg, anhydrous citric acid 0.4kg, malic acid 0.2kg, cherry essence 0.02kg.

The temperature-resistant gel gummy candy was prepared according to the following steps:
1) gel melting: adding water in an amount twice the weight of gelatin to a glue digester, adding gelatin when the temperature was raised to 60°C-80°C, stirring until gelatin was completely dissolved, standing at the same temperature for 2 h to obtain a transparent gel solution A, and thoroughly mixing gellan gum and pectin with xylitol in an amount 5 times the weight thereof, and adding water in an amount 10 times the weight thereof and boiling the mixture to obtain a gel solution B,
2) sugar melting: after boiling xylitol, maltol, and sorbitol by heating, adding water-dispersed modified starch paste in an amount twice the weight thereof, keeping the sugar solution boiling and adding the gel solution B, continuing boiling until the solids in the sugar solution reached 82 Brix as measured by Brix spindle, and then stopping heating to obtain the substance C,
3) sugaring off: mixing the transparent gel solution A and the substance C, stirring the mixture homogenously, and then performing vacuum degassing until the solution was transparent and contained no bubble, to obtain a mixed solution with a temperature of 80°C-95°C,
4) blending: pouring the mixed solution obtained in step 3) into a blending barrel, the temperature of which was set to 80°C-90°C, and then adding 50% citric acid and malic acid solution, and cherry essence, to the mixed solution, and homogenously stirring and blending the mixture,
5) casting moulding: performing casting by transferring the blended solution in step 4) to a casting machine, selecting a casting mould in a bear shape (3.0 g/grain), and getting about 6000 grains;
6) drying: transferring the gummy candy product obtained after casting moulding in step 5) to a confined space at about 22°C and a relative humidity of 18%-20%, and drying the product to a water content of 17%; and
7) subjecting the dried product to demoulding, polishing and packaging to obtain the final product.

### Example 6: Organoleptic investigation assay on temperature-resistant gel gummy candy

The gel gummy candies obtained above were subjected to organoleptic investigation assay. In the organoleptic investigation assay, 20 valuators were invited to degust and assess various samples, and evaluated the three items, i.e. taste, mouth feel (Q property or chewing feel) and total eating feel by the scoring method in accordance with evaluation standards in Table 1.

**Table 1: The organoleptic investigation standards for temperature-resistant gel gummy candy (5 grades)**

| Evaluation Items | Evaluation standards | Scores |
|---|---|---|
| Gel gummy candy | Bad (tough, sticky or no Q property) | 1 |
| | poor | 2 |
| taste mouth feel total eating feel | ordinary | 3 |
| | good | 4 |
| | very good (neither too hard, nor too soft) | 5 |

The results of organoleptic investigation assay were represented by the average values of evaluation of various samples made by 20 assessors, as listed in Table 2, wherein Comparative samples 1, 2 and Comparative sample 3 were commercially available gel gummy candies of the same gelatin type (3 g/grain). For Comparative sample 1, it was shown on the label that the ingredients include glucose syrup, white granulated sugar, gelatin, citric acid, edible essence, and carminum. For Comparative sample 2, it was shown on the label that the ingredients include glucose syrup, white granulated sugar, gelatin, pectin, citric acid, edible essence, and allura red. For Comparative sample 3, it was shown on the label that the ingredients include maltitol, erythritol, xylitol, gelatin, sucralose, citric acid, malic acid, and edible essence.

**Table 2: Results of organoleptic investigation assay on gel gummy candy**

| Samples | Organoleptic investigation items | | |
|---|---|---|---|
| | Taste of gummy candy | Mouth feel of gummy candy | Total eating feel |
| Comparative sample 1 | 3.8 | 3.2 | 3.2 |
| Comparative sample 2 | 4.0 | 3.6 | 3.8 |
| Comparative sample 3 | 4.1 | 3.8 | 4.0 |
| Example 1 | 4.6 | 4.3 | 4.6 |
| Example 2 | 4.3 | 4.4 | 4.4 |
| Example 3 | 4.5 | 4.7 | 4.5 |
| Example 4 | 4.2 | 4.3 | 4.3 |
| Example 5 | 4.6 | 4.5 | 4.5 |

The Comparative samples 1-3 in the prior art are common commercially available gelatin gel gummy candies (wherein Comparative sample 3 is sugar-free gelatin gel candy), which were evaluated to have a good taste and a general mouth feel score. The samples prepared in Examples 1-5 had good results in the evaluation of the three items.

### Example 7: Stability Investigation 1 of the temperature-resistant gel gummy candies (temperature resistance assay)

The temperature-resistant gel gummy candy samples 1-5, and Comparative samples 1-3 were respectively packaged in the same weight (180 g, i.e. 60 grains for the sample 3 g/grain, 45 grains for the sample 4 g/grain, 72 grains for the sample 2.5 g/grain) in identical containers which were placed in a thermostat (the temperature was set in the range of 38-44°C, and the samples were placed at each temperature for 12 h, and the temperature was increased by 2°C for each time). By comparing deformation, surface sticking and melting, the highest resistant temperature and duration of the products were determined, wherein when there was no sticking and no deformation among products, the products were evaluated as "V"; when there was sticking and slight deformation among products but the products were easily separated, the products were evaluated as "O"; and when there was sticking and melting phenomenon among products and the products were not easily separated, the products were evaluated as "X".

The temperature resistance results of the products evaluated by temperature resistance assay are shown in Table 3.

**Table 3: Results of temperature-resistance assay**

| Samples | Results of temperature-resistance assay | | | |
|---|---|---|---|---|
| | 38°C | 40°C | 42°C | 44°C |
| Comparative sample 1 | V | O | X | |
| Comparative sample 2 | O | X | X | |
| Comparative sample 3 | V | V | O | X |
| Example 1 | V | V | V | O |
| Example 2 | V | V | V | O |
| Example 3 | V | V | V | V |
| Example 4 | V | V | V | V |
| Example 5 | V | V | V | V |

The results of table 3 show that the temperature-resistant gel gummy candies of the invention are clearly superior to commercially available gelatin gel gummy candy products in terms of temperature resistance.

### Example 8: Stability Investigation 2 of the temperature-resistant gel gummy candies (shelf life assay)

The gel gummy candy samples 1-5 and Comparative samples 1-3 were respectively packaged in the same weight (180 g, i.e. 60 grains for the sample 3 g/grain, 45 grains for the sample 4 g/grain, 72 grains for the sample 2.5 g/grain) in identical containers which were placed in a 37-38°C/RH75% constant temperature and constant humidity chamber. After measuring the initial value at 0 day, organoleptic, physiochemical, and microbial indexes were measured every 15 days. If all the indexes met the labeled values and the product standards, the products were investigated continuously so as to determine the shelf life of the products. Generally, those, all the measured values of which met the requirements at day 45, had a shelf life of at least 12 months, and those, all the measured values of which met the requirements at day 90, had a shelf life of at least 24 months. The samples, one of whose organoleptic, physiochemical, and microbial indexes, did not meet the requirements were marked as "-". The samples, two of whose organoleptic, physiochemical, and microbial indexes did not meet the requirements, were marked as "--". And the samples, all of whose indexes met the requirements, were marked as "+". The results were shown in table 4.

**Table 4 : Results of shelf life assay**

| Samples | Results of shelf life assay | | | | | |
|---|---|---|---|---|---|---|
| | 15d | 30d | 45d | 60d | 75d | 90d |
| Comparative sample 1 | + | + | - | -- | | |
| Comparative sample 2 | + | + | - | -- | | |
| Comparative sample 3 | + | + | + | - | -- | |
| Example 1 | + | + | + | + | + | - |
| Example 2 | + | + | + | + | + | + |
| Example 3 | + | + | + | + | + | + |
| Example 4 | + | + | + | + | + | + |
| Example 5 | + | + | + | + | + | + |

The results in table 4 show that the temperature-resistant gel gummy candy samples of the invention have a much longer shelf life than the Comparative samples, which is good for storage and sales of products.

In sum, the temperature-resistant gel gummy candies of the invention have good taste and mouth feel, good temperature resistance, as well as a long shelf life.

Although the specific embodiments of the invention have been described in detail, a person skilled in the art would understand that according to all the teachings disclosed herein, various modifications and substitutions may be made to the details, and these changes fall into the protection scope of the invention. The whole scope of the invention is defined by the appended claims.

## Claims

1. A mixed gel comprising or consisting of gelatin, gellan gum, pectin and modified starch, wherein the proportion of gelatin, gellan gum, pectin and modified starch (by mass) is: gelatin 4-10 part, gellan gum 0.1-1 part, pectin 0.2-1.2 parts, modified starch 2-5 parts.

2. The mixed gel according to claim 1, wherein the proportion of gelatin, gellan gum, pectin and modified starch (by mass) is: gelatin 4-10 parts, gellan gum 0.1-1 part, pectin 0.2-1.2 parts, modified starch 2-5 parts; preferably gelatin 4-9 parts, gellan gum 0.1-0.8 part, pectin 0.2-1.2 parts, modified starch 2-5 parts; more preferably, gelatin 5-8 parts, gellan gum 0.1-0.8 part, pectin 0.2-0.8 part, modified starch 2-5 parts; even more preferably, gelatin 5-7 parts, gellan gum 0.1-0.6 part, pectin 0.2-0.6 part, and modified starch 2-4 parts.

3. A gummy candy product comprising sugar components and a mixed gel according to claim 1.

4. The gummy candy product according to claim 3, **characterized in that** it comprises the following components in the following proportion:
| | |
|---|---|
| white granulated sugar | 10%-50% |
| starch syrup | 10%-50% |
| gelatin | 4%-10% |
| sorbitol | 2%-6% |
| gellan gum | 0.1%-1% |
| modified starch | 2%-5% |
| pectin | 0.2%-1.2% |
| sour agent | 0.5%-5% |
| edible essence | 0.1%-2% |
| edible colorant | 0.005%-0.05% |
| water | 12%-20%. |

5. The gummy candy product according to claim 3, comprising the following components in the following proportion:
| | |
|---|---|
| white granulated sugar | 15%-40% |
| starch syrup | 10%-40% |
| gelatin | 4%-9% |
| sorbitol | 2%-5% |
| gellan gum | 0.1%-0.8% |
| modified starch | 2%-5% |
| pectin | 0.2%-1.2% |
| sour agent | 0.5%-5% |
| edible essence | 0.1%-2% |
| edible colorant | 0.005%-0.05% |
| water | 12%-20%. |

6. The gummy candy product according to claim 3, wherein the temperature-resistant gel candy comprises:
| | |
|---|---|
| white granulated sugar | 20%-35% |
| starch syrup | 15%-40% |
| gelatin | 5%-8% |
| sorbitol | 2%-5% |
| gellan gum | 0.1%-0.8% |
| modified starch | 2%-5% |
| pectin | 0.2%-0.8% |
| sour agent | 0.5%-4% |
| edible essence | 0.1%-1.5% |
| edible colorant | 0.005%-0.04% |
| water | 12%-20%. |

7. The gummy candy product according to claim 3, wherein the temperature-resistant gel candy comprises:
| | |
|---|---|
| white granulated sugar | 25%-35% |
| starch syrup | 18%-35% |
| gelatin | 5%-7% |
| sorbitol | 2%-4% |
| gellan gum | 0.1%-0.6% |
| modified starch | 2%-4% |
| pectin | 0.2%-0.6% |
| sour agent | 0.5%-4% |
| edible essence | 0.1%-1.5% |
| edible colorant | 0.005%-0.04% |
| water | 12%-20%. |

8. The gummy candy product according to claims 3-7, wherein:
the gelatin is hide glue or bone glue with a gel strength of above 180 Bloom;
the starch syrup has a DE value of 38%-44% and a solid content of 70%-84%;
the sorbitol solid content is 70%;
the modified starch is the acetate starch of potato, corn, or cassava;
the sour agent is selected from the group consisting of one or more of citric acid, malic acid, lactic acid, tartaric acid or phosphoric acid; and
the edible essence and the natural edible colorant are one or more additives that are allowed to be added to gel candies according to regulations on food additives.

9. A method for preparing the gummy candy product according to claims 3-8, comprising:
1) gel melting: adding water in an amount twice the weight of gelatin to a glue digester, adding gelatin when the temperature is raised to 60°C-80°C, stirring until gelatin is completely dissolved, standing at the same temperature for 1-3 h to obtain a transparent gel solution A, thoroughly mixing gellan gum and pectin with white granulated sugar or sugar alcohol in an amount 5 times the weight thereof, and adding water in an amount 12 times the weight thereof, and boiling the mixture to obtain a gel solution B,
2) sugar melting: after boiling white granulated sugar, starch syrup, or sugar alcohols, sweetener by heating, adding water-dispersed modified starch paste in an amount twice the weight thereof, keeping the sugar solution boiling and adding the gel solution B, continuing boiling until the solids in the sugar solution reach 76-80 Brix as measured by Brix spindke, and then stopping heating to obtain the substance C,
3) sugaring off: mixing the transparent gel solution A and the substance C, stirring the mixture homogenously, and then performing vacuum degassing until the solution is transparent and contains no bubble, to obtain a mixed solution with a temperature of 80°C-95°C,
4) blending: pouring the mixed solution obtained in step 3) into a blending barrel, the temperature of which is set to 80°C-90°C, and then adding sour agent, edible essence, edible colorant to the mixed solution, and homogenously stirring and blending the mixture,
5) casting moulding: performing casting by transferring the blended solution in step 4) to a casting machine,
6) drying: transferring the gummy candy product obtained after casting moulding in step 5) to a confined space at 20°C-30°C and a relative humidity of 15%-40%, and drying the product to a water content of 12%-20%;
7) subjecting the dried product to demoulding, polishing and packaging to obtain the final product.

10. Use of the mixed gel according to claim 1 for preparing a gummy candy product.

## Patentansprüche

1. Gemischtes Gel, umfassend oder bestehend aus Gelatine, Gellangummi, Pektin und modifizierter Stärke, wobei der Anteil an Gelatine, Gellangummi, Pektin und modifizierter Stärke (in Masse) beträgt: Gelatine 4-10 Teile, Gellangummi 0,1-1 Teile, Pektin 0,2-1,2 Teile, modifizierte Stärke 2-5 Teile.

2. Gemischtes Gel nach Anspruch 1, wobei der Anteil an Gelatine, Gellangummi, Pektin und modifizierter Stärke (in Masse) beträgt: Gelatine 4-10 Teile, Gellangummi 0,1-1 Teile, Pektin 0,2-1,2 Teile, modifizierte Stärke 2-5 Teile; bevorzugt Gelatine 4-9 Teile, Gellangummi 0,1-0,8 Teile, Pektin 0,2-1,2 Teile, modifizierte Stärke 2-5 Teile; bevorzugter Gelatine 5-8 Teile, Gellangummi 0,1-0,8 Teile, Pektin 0,2-0,8 Teile, modifizierte Stärke 2-5 Teile; noch bevorzugter Gelatine 5-7 Teile, Gellangummi 0,1-0,6 Teile, Pektin 0,2-0,6 Teile und modifizierte Stärke 2-4 Teile.

3. Gummibonbonprodukt, umfassend Zuckerkomponenten und ein gemischtes Gel nach Anspruch 1.

4. Gummibonbonprodukt nach Anspruch 3, **dadurch gekennzeichnet, dass** es die folgenden Komponenten in dem folgenden Verhältnis umfasst:
| | |
|---|---|
| weißer Kristallzucker | 10%-50%, |
| Stärkesirup | 10%-50%, |
| Gelatine | 4%-10%, |
| Sorbitol | 2%-6%, |
| Gellangummi | 0,1%-1%, |
| modifizierte Stärke | 2%-5%, |
| Pektin | 0,2%-1,2%, |
| Säuerungsmittel | 0,5%-5%, |
| essbare Essenz | 0,1%-2%, |
| essbarer Farbstoff | 0,005%-0,05%, |
| Wasser | 12%-20%. |

5. Gummibonbonprodukt nach Anspruch 3, umfassend die folgenden Komponenten in dem folgenden Verhältnis:
| | |
|---|---|
| weißer Kristallzucker | 15%-40%, |
| Stärkesirup | 10%-40%, |
| Gelatine | 4%-9%, |
| Sorbitol | 2%-5%, |
| Gellangummi | 0,1%-0,8% |
| modifizierte Stärke | 2%-5%, |
| Pektin | 0,2%-1,2%, |
| Säuerungsmittel | 0,5%-5%, |
| essbare Essenz | 0,1%-2%, |
| essbarer Farbstoff | 0,005%-0,05%, |
| Wasser | 12%-20%. |

6. Gummibonbonprodukt nach Anspruch 3, wobei das temperaturbeständige Gelbonbon umfasst:
| | |
|---|---|
| weißer Kristallzucker | 20%-35%, |
| Stärkesirup | 15%-40%, |
| Gelatine | 5%-8%, |
| Sorbitol | 2%-5%, |
| Gellangummi | 0,1%-0,8%, |
| modifizierte Stärke | 2%-5%, |
| Pektin | 0,2%-0,8%, |
| Säuerungsmittel | 0,5%-4%, |
| essbare Essenz | 0,1%-1,5%, |
| essbarer Farbstoff | 0,005%-0,04%, |
| Wasser | 12%-20%. |

7. Gummibonbonprodukt nach Anspruch 3, wobei das temperaturbeständige Gelbonbon umfasst:
| | |
|---|---|
| weißer Kristallzucker | 25%-35%, |
| Stärkesirup | 18%-35%, |
| Gelatine | 5%-7%, |
| Sorbitol | 2%-4%, |
| Gellangummi | 0,1%-0,6%, |
| modifizierte Stärke | 2%-4%, |
| Pektin | 0,2%-0,6%, |
| Säuerungsmittel | 0,5%-4%, |
| essbare Essenz | 0,1%-1,5%, |
| essbarer Farbstoff | 0,005%-0,04%, |
| Wasser | 12%-20% |

8. Gummibonbonprodukt nach den Ansprüchen 3-7, wobei:
die Gelatine Hautkleber oder Knochenkleber mit einer Gelstärke von über 180 Bloom ist;
der Stärkesirup einen DE-Wert von 38%-44% und einen Feststoffgehalt von 70%-84% aufweist;
der Sorbitol-Feststoffgehalt 70% beträgt;
die modifizierte Stärke die Acetatstärke von Kartoffeln, Mais oder Maniok ist;
das Säuerungsmittel gewählt ist aus der Gruppe, bestehend aus einer oder mehreren aus Zitronensäure, Apfelsäure, Milchsäure, Weinsäure oder Phosphorsäure; und
die essbare Essenz und der natürliche essbare Farbstoff ein oder mehrere Zusatzstoffe sind, die Gelbonbons nach den Vorschriften über Lebensmittelzusatzstoffe zugesetzt werden dürfen.

9. Verfahren zur Herstellung des Gummibonbonprodukts nach den Ansprüchen 3-8, umfassend:
1) Gelschmelzen: Zugeben von Wasser in einer Menge, die dem Doppelten des Gewichts an Gelatine entspricht, zu einem Leimkocher, Zugeben von Gelatine, wenn die Temperatur auf 60°C-80°C angehoben wird, Rühren bis die Gelatine vollständig gelöst ist, Stehen lassen bei der gleichen Temperatur für 1-3 h, um eine transparente Gelösung A zu erhalten, gründliches Mischen von Gellangummi und Pektin mit weißem Kristallzucker oder Zuckeralkohol in einer Menge, die dem 5-fachen des Gewichts entspricht, und Zugeben von Wasser in einer Menge, die dem 12-fachen des Gewichts entspricht und Sieden der Mischung, um eine Gelösung B zu erhalten,
2) Zuckerschmelzen: nach dem Kochen des weißen Kristallzuckers, Stärkesirups oder Zuckeralkohole, Süßstoff durch Erwärmung, Zugeben von wasserdispergierter modifizierter Stärkepaste in einer Menge, die dem Doppelten des Gewichts entspricht, Halten der Zuckerlösung am Kochen und Zugeben der Gel-Lösung B, Weiterkochen bis die Feststoffe in der Zuckerlösung 76-80 Brix erreichen, gemessen mit der Brix-Spindel und dann Beenden des Erwärmens, um die Substanz C zu erhalten,
3) Abzuckern: Mischen der transparenten Gellösung A und der Substanz C, homogenes Rühren der Mischung und anschließendes Vakuumentgasen, bis die Lösung transparent ist und keine Luftblasen enthält, um eine gemischte Lösung mit einer Temperatur von 80°C-95°C zu erhalten,
4) Mischen: Gießen der in Schritt 3) erhaltenen gemischten Lösung in einen Mischzylinder, dessen Temperatur auf 80°C-90°C eingestellt ist und anschließend Zugeben von Säuerungsmittel, essbarer Essenz, essbarem Farbstoff zu der gemischten Lösung, und homogenes Rühren und Mischen der Mischung,
5) Gießformen: Durchführen des Gießens durch Überführen der in Schritt 4) gemischten Lösung in eine Gießmaschine,
6) Trocknen: Überführen des nach Gießformen in Schritt 5) erhaltenen Gummibonbonprodukts in einen engen Raum bei 20°C-30°C und einer relativen Luftfeuchtigkeit von 15%-40% und Trocknen des Produkts auf einen Wassergehalt von 12%-20%;
7) Unterwerfen des getrockneten Produkts einem Entformen, Polieren und Verpacken, um das Endprodukt zu erhalten.

10. Verwendung eines gemischten Gels nach Anspruch 1 zur Herstellung eines Gummibonbonprodukts.

## Revendications

1. Gel mixte comprenant ou constitué de gélatine, de gomme de gellane, de pectine et d'amidon modifié, la proportion de la gélatine, de la gomme de gellane, de la pectine et de l'amidon modifié (en masse) étant : gélatine de 4 à 10 parties, gomme de gellane de 0,1 à 1 partie, pectine de 0,2 à 1,2 partie, amidon modifié de 2 à 5 parties.

2. Gel mixte selon la revendication 1, la proportion de la gélatine, de la gomme de gellane, de la pectine et de l'amidon modifié (en masse) étant : gélatine de 4 à 10 parties, gomme de gellane de 0,1 à 1 partie, pectine de 0,2 à 1,2 partie, amidon modifié de 2 à 5 parties ; plus préférablement gélatine de 4 à 9 parties, gomme de gellane de 0,1 à 0,8 partie, pectine de 0,2 à 1,2 partie, amidon modifié de 2 à 5 parties ; plus préférablement, gélatine de 5 à 8 parties, gomme de gellane de 0,1 à 0,8 partie, pectine de 0,2 à 0,8 partie, amidon modifié de 2 à 5 parties ; et même plus préférablement, gélatine de 5 à 7 parties, gomme de gellane de 0,1 à 0,6 partie, pectine de 0,2 à 0,6 partie, et amidon modifié de 2 à 4 parties.

3. Bonbon gommeux comprenant des constituants sucres et un gel mixte selon la revendication 1.

4. Bonbon gommeux selon la revendication 3, **caractérisé en ce qu'**il comprend les constituants suivants selon les proportions suivantes :
| | |
|---|---|
| sucre granulé blanc | 10 % à 50 % |
| sirop d'amidon | 10 % à 50 % |
| gélatine | 4 % à 10 % |
| sorbitol | 2 % à 6 % |
| gomme de gellane | 0,1 % à 1 % |
| amidon modifié | 2 % à 5 % |
| pectine | 0,2 % à 1,2 % |
| agent acidifiant | 0,5 % à 5 % |
| essence comestible | 0,1 % à 2 % |
| colorant comestible | 0,005 % à 0,05 % |
| eau | 12 % à 20 %. |

5. Bonbon gommeux selon la revendication 3, comprenant les constituants suivants selon les proportions suivantes :
| | |
|---|---|
| sucre granulé blanc | 15 % à 40 % |
| sirop d'amidon | 10 % à 40 % |
| gélatine | 4 % à 9 % |
| sorbitol | 2 % à 5 % |
| gomme de gellane | 0,1 % à 0,8 % |
| amidon modifié | 2 % à 5 % |
| pectine | 0,2 % à 1,2 % |
| agent acidifiant | 0,5 % à 5 % |
| essence comestible | 0,1 % à 2 % |
| colorant comestible | 0,005 % à 0,05 % |
| eau | 12 % à 20 %. |

6. Bonbon gommeux selon la revendication 3, le bonbon gélifié résistant à la température comprenant :
| | |
|---|---|
| sucre granulé blanc | 20 % à 35 % |
| sirop d'amidon | 15 % à 40 % |
| gélatine | 5 % à 8 % |
| sorbitol | 2 % à 5 % |
| gomme de gellane | 0,1 % à 0,8 % |
| amidon modifié | 2 % à 5 % |
| pectine | 0,2 % à 0,8 % |
| agent acidifiant | 0,5 % à 4 % |
| essence comestible | 0,1 % à 1,5 % |
| colorant comestible | 0,005 % à 0,04 % |
| eau | 12 % à 20 %. |

7. Bonbon gommeux selon la revendication 3, le bonbon gélifié résistant à la température comprenant :
| | |
|---|---|
| sucre granulé blanc | 25 % à 35 % |
| sirop d'amidon | 18 % à 35 % |
| gélatine | 5 % à 7 % |
| sorbitol | 2 % à 4 % |
| gomme de gellane | 0,1 % à 0,6 % |
| amidon modifié | 2 % à 4 % |
| pectine | 0,2 % à 0,6 % |
| agent acidifiant | 0,5 % à 4 % |
| essence comestible | 0,1 % à 1,5 % |
| colorant comestible | 0,005 % à 0,04 % |
| eau | 12 % à 20 %. |

8. Bonbon gommeux selon les revendications 3 à 7, dans lequel :
la gélatine est une colle cachée ou une colle d'os ayant un pouvoir gélifiant supérieur à 180 Bloom ;
le sirop d'amidon présente une valeur DE de 38 % à 44 % et une teneur en matières solides de 70 % à 84 % ;
la teneur solide en sorbitol est de 70 % ;
l'amidon modifié est l'amidon acétate de pomme de terre, de maïs, ou de manioc ;
l'agent acidifiant est sélectionné dans le groupe constitué de l'un ou plusieurs parmi l'acide citrique, l'acide malique, l'acide lactique, l'acide tartarique ou l'acide phosphorique ; et
l'essence comestible et le colorant comestible d'origine naturelle sont un ou plusieurs additifs qui sont autorisés pour l'addition aux bonbons gélifiés selon les réglementations concernant les additifs alimentaires.

9. Procédé de préparation d'un bonbon gommeux selon les revendications 3 à 8, comprenant :
1) la fusion du gel : addition d'eau en une quantité qui est le double du poids de la gélatine à un agent de digestion de colle, l'addition de gélatine lorsque la température est élevée à 60°C à 80°C, l'agitation jusqu'à ce que la gélatine est complètement dissoute, le repos à la même température durant 1 à 3 h pour obtenir une solution de gel transparent A, le mélange de manière approfondie de la gomme de gellane et de la pectine avec du sucre granulé blanc ou de l'alcool de sucre en une quantité représentant 5 fois son poids, et l'addition d'eau en une quantité représentant 12 fois son poids, et l'ébullition du mélange pour obtenir une solution de gel B,
2) fusion du sucre : après l'ébullition du sucre granulé blanc, du sirop d'amidon, ou des alcools de sucre, de l'édulcorant par chauffage, l'ajout de pâte d'amidon modifié dispersée dans de l'eau en une quantité représentant le double de son poids, le maintien de l'ébullition de la solution de sucre et l'addition de solution de gel B, la poursuite de l'ébullition jusqu'à ce que les matières solides dans la solution de sucre atteignent 76 à 80 Brix tel que mesuré à l'aide d'une tige Brix, et ensuite l'arrêt du chauffage pour obtenir la substance C,
3) temps du sucre : mélange de la solution de gel transparent A et de la substance C, agitation du mélange de manière homogène, et ensuite réalisation du dégazage sous vide jusqu'à ce que la solution devienne transparente et ne contienne pas de bulles, pour obtenir une solution mixte avec une température de 80°C à 95°C,
4) mélange : verser la solution mixte obtenue dans l'étape 3) dans un baril de mélange, dont la température est réglée à 80°C à 90°C, et ensuite ajouter de l'agent acidifiant, de l'essence comestible, du colorant comestible à la solution mixte, et agiter et mélanger le mélange de manière homogène,
5) moulage par coulée : réalisation de la coulée par transfert de la solution mélangée dans l'étape 4) vers une machine de coulée,
6) séchage : transfert du bonbon gommeux obtenu après le moulage par coulée dans l'étape 5) vers un espace confiné à 20°C à 30°C et une humidité relative de 15 % à 40 %, et séchage du produit jusqu'à une teneur en eau de 12 % à 20 % ;
7) soumission du produit séché au démoulage, au polissage et à l'emballage pour obtenir le produit final.

10. Utilisation du gel mixte selon la revendication 1 pour la préparation d'un bonbon gommeux.
